# EUROPEAN PATENT APPLICATION

(11) **EP 2 218 884 A1**
(43) Date of publication of application: **18.08.2010**
(21) Application number: 08860070.5
(22) Date of filing: 05.12.2008
(51) Int. Cl.: F01N 3/02, B01D 46/42

(54) **EXHAUST GAS POST-PROCESSING DEVICE**

(30) Priority: 10.12.2007 JP 2007318643
(71) Applicant: Mitsubishi Fuso Truck and Bus Corporation, Kawasaki-shi Kanagawa 212-0058 (JP)
(72) Inventor: KODAMA, Kenji, Kawasaki-shi Kanagawa 212-0058 (JP); KOBAYASHI, Tadao, Kawasaki-shi Kanagawa 212-0058 (JP)
(74) Representative: advotec.
(86) International application number: PCT/JP2008/072166
(87) International publication number: WO 2009/075230

(57) **Abstract**

When an estimated value (A value) of an accumulation amount in a filter for trapping particulate matter reaches a prescribed value A1 corresponding to a prescribed accumulation amount Qm of the particulate matter and ash (S12), the forced regeneration of the filter is performed (S20); and when the estimated value (A value) reaches the prescribed value A1 again before the elapsed time since the completion of the forced regeneration of the filter reaches a prescribed time period T1 (S12, S14), it is judged that the amount of the ash accumulated in the filter is equal to or larger than a regulation amount (cleaning is required).

## Description

### Technical Fiend

The present invention relates to an exhaust aftertreatment device, and more specifically, to a technology of assessing ash accumulation in a filter for trapping particulate matter contained in exhaust gas of a diesel engine.

### Background Art

An exhaust path of a vehicle diesel engine is normally provided with a filter for trapping particulate matter (PM) such as soot together with an exhaust purification catalyst. By this means, harmful substances (CO, HC, NOx, etc.) in exhaust gas are oxidized or reduced to be removed, and are prevented from being dispersed in the atmosphere.

Particulate matter is accumulated in the filter, and it is burned and removed by heating the filter to higher temperature. The filter is thus regenerated and prevented from clogging. In general, a so-called forced regeneration is carried out. In the forced regeneration, an estimation is made of PM accumulation amount in the filter on the basis of differential pressure between the front and rear sections of the filter, exhaust gas flow rate, etc., and when it is determined that the estimated value is equal to or higher than prescribed amount, the filter is forcibly heated to higher temperature.

The filter traps not only PM but also Ash. PM consists chiefly of burnable components such as carbon, whereas Ash consists of flame-retardant components such as calcium (Ca) contained in engine oil and the like. Ash therefore has the problem that it is not removed by forced regeneration and remains accumulated in the filter.

For that reason, it is common to clean the filter, for example, once every certain time period.

Considering that the filter should be cleaned depending onAshaccumulationamount, and that the estimated value includes the Ash accumulation amount, for example, a well-known technology obtains the estimated value again after forced regeneration, and estimates the accumulation amount of the Ash that fails to be burned and remains in the filter (see Patent Document 1 and the like).
[Patent Document 1] Kokai No. 2004-211650

### Disclosure of the Invention

### Problem to be Solved by the Invention

According to the Patent Document 1 and the like, the PM and Ash accumulation amount in the filter is estimated from differential pressure between the front and rear sections of the filter, exhaust gas flow rate, etc. On the basis of this estimated value, an estimation of the Ash accumulation amount is made. The estimation based upon the differential pressure between the front and rear sections of the filter, the exhaust gas flow rate, and the like, often contains an error for various reasons especially under the situation where the PM and Ash accumulation amount in the filter is small. An accurate estimation of the Ash accumulation amount is therefore difficult, so that Ash accumulation cannot be properly assessed.

For example, when the Ash accumulation amount is estimated to be smaller than actual amount, filter clogging progresses, and the trapping of particulate matter is not successfully performed. Further, exhaust pressure is overall increased, deteriorating fuel consumption and affecting engine operation. To the contrary, when the Ash accumulation amount is estimated to be larger than actual amount, the filter is cleaned more frequently than necessary. This is also undesirable.

The invention has been made to solve the foregoing problems. It is an object to provide an exhaust aftertreatment device that is capable of properly assessing ash accumulation in a filter for trapping particulate matter.

### Means for Solving the Problem

In order to solve the above object, an exhaust aftertreatment device claimed in claim 1 has a filter that is interposed in an exhaust path of an internal combustion engine and traps particulate matter and ash in exhaust gas; differential-pressure detecting means for detecting differential pressure between exhaust pressure on an exhaust-gas upstream side of the filter and exhaust pressure on an exhaust-gas downstream side of the filter in the exhaust path; accumulation-amount estimating means for estimating an accumulation amount of the particulate matter and ash trapped in the filter at least on the basis of differential pressure information transmitted from the differential-pressure detecting means; forced regeneration means for forcibly regenerating the filter by burning and removing the particulate matter trapped in the filter when an estimated value obtained by the accumulation-amount estimating means reaches a prescribed value corresponding to a prescribed accumulation amount of the particulate matter and the ash; timing means for measuring an elapsed time since the completion of the forced regeneration of the filter by the forced regeneration means; and ash-judging means for judging that an amount of ash accumulated in the filter is equal to or larger than a regulation amount when the estimated value obtained by the accumulation-amount estimating means reaches the prescribed value again before the elapsed time measured by the timing means reaches a prescribed time period.

In the exhaust aftertreatment device claimed in claim 2 according to claim 1, the ash-judging means judges that the amount of the ash accumulated in the filter is equal to or larger than the regulation amount when the forced regeneration of the filter by the forced regeneration means is repeated, and the estimated value reaches the prescribed value a predetermined number of times or more before the elapsed time measured by the timing means reaches a regulation time period.

The exhaust aftertreatment device claimed in claim 3 according to either one of claims 1 and 2 further has warning means for giving a warning to urge the cleaning of the filter when the ash-judging means judges that the amount of the ash is equal to or larger than the regulation amount.

### Advantageous Effect of the Invention

In the exhaust aftertreatment device claimed in claim 1, if the estimated value obtained by the accumulation-amount estimating means reaches the prescribed value corresponding to the prescribed accumulation amount of the particulate matter and the ash, the forced regeneration of the filter is performed by the forced regeneration means; and if the estimated value obtained by the accumulation-amount estimating means reaches the prescribed value again before the elapsed time since completion of the forced regeneration of the filter by the forced regeneration reaches the prescribed time period, the ash-judging means judges that the amount of the ash accumulated in the filter is equal to or larger than the regulation amount.

Under the situation where the accumulation amount of the particulate matter and the ash in the filter is small, the estimated value often contains an error for various reasons.
It is then difficult to accurately estimate an ash accumulation amount, and there is the possibility that ash accumulation cannot be properly assessed. However, if the forced regeneration of the filter is performed when the estimated value reaches the prescribed value corresponding to the relatively large prescribed accumulation amount of the particulate matter and the ash as described above, and if it is judged that the amount of the ash accumulated in the filter is equal to or larger than the regulation amount when the estimated value later reaches the prescribed value again within a prescribed time period as mentioned above, it is possible to eliminate an affect of the error and yet precisely realize the decrease of an interval of the forced regeneration that is performed when a particulate matter-trapping function of the filter is deteriorated. Consequently, ash accumulation can be assessed with accuracy.

By this means, the ash is removed by cleaning the filter with the most suitable timing. The filter clogging caused by ash is thus prevented from progressing, and the particulate matter-trapping function of the filter is well maintained. Overall, an increase of exhaust pressure and a deterioration of fuel consumption are prevented. In addition, the filter is prevented from being excessively cleaned.

In the exhaust aftertreatment device claimed in claim 2, it is judged that the amount of the ash accumulated in the filter is equal to or larger than the regulation amount when the estimated value reaches the prescribed value a predetermined number of times or more within a regulation time period.

It is then possible to avoid a faulty judgment and assess the ash accumulation with accuracy.

In the exhaust aftertreatment device claimed in claim 3, when the amount of the ash accumulated in the filter becomes equal to or larger than the regulation amount, filter cleaning is urged. This way, the filter is cleaned without fail, and the ash is removed.

### Brief Description of the Drawings

FIG. 1 is a system configuration view of the entire engine including an exhaust aftertreatment device according to the invention;
FIG. 2 is a flowchart showing a judgment routine of Ash-cleaning judgment procedures;
FIG. 3 shows a relationship between an accumulation amount Qm and an A value; and
FIG. 4 shows a relationship between an A value proportional to changes of ash accumulation amount and a forced regeneration interval.

### Reference Marks

- 1: Engine (diesel engine)
- 20: Exhaust pipe (exhaust path)
- 30: Exhaust aftertreatment unit
- 38: DPF (filter)
- 40: Upstream pressure sensor
- 42: Downstream pressure sensor
- 44: Flow rate sensor
- 46: Exhaust temperature sensor

### Best Mode of Carrying out the Invention

One embodiment of the invention will be described below with reference to the attached drawings.

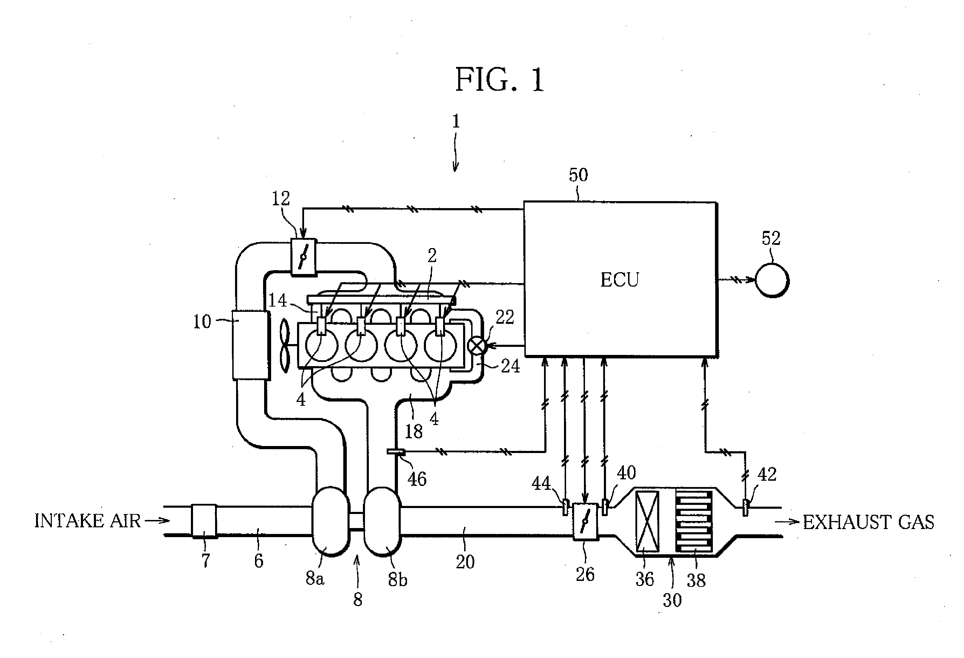

FIG. 1 shows a system configuration view of a 4-cylinder diesel engine (hereinafter, referred to as engine) installed in a vehicle, the engine being equipped with an exhaust aftertreatment device according to the invention.

The engine 1 has a high-pressure accumulator (hereinafter, referred to as common rail) 2 that is common to cylinders. Diesel oil, which is a high-pressure fuel supplied from a fuel-injection pump, not shown, and stored in the common rail 2, is fed to injectors 4 provided to the cylinders, and is then injected from the injectors 4 into the cylinders.

A turbocharger 8 is interposed in an intake path 6. Intake air that is sucked from an air cleaner 7 runs through the intake path 6 into a compressor 8a of the turbocharger 8. The intake air that is supercharged in the compressor 8a travels through an intercooler 10 and an intake control valve 12, and is introduced into an intake manifold 14.

An exhaust port (not shown) to which exhaust gas is discharged from the cylinders of the engine 1 is connected to an exhaust pipe (exhaust path) 20 via an exhaust manifold 18. Disposed between the exhaust manifold 18 and the intake manifold 14 is an EGR path 24 connecting the exhaust manifold 18 and
the intake manifold 14 to each other with an EGR valve 22 interposed therebetween.

The exhaust pipe 20 extends through a turbine 8b of the turbocharger 8 and is connected via an exhaust throttle valve 26 to an exhaust aftertreatment unit 30. A rotary shaft of the turbine 8b is joined to a rotary shaft of the compressor 8a. The turbine 8b drives the compressor 8a by receiving the exhaust gas flowing through the exhaust pipe 20.

The exhaust aftertreatment unit 30 contains an oxidation catalyst 36, and further contains a diesel particulate filter (hereinafter, referred to as DPF) 38 on an exhaust downstream side of the oxidation catalyst 36. The DPF 38 is provided to purify the exhaust gas of the engine 1 by trapping particulate matter (hereinafter, referred to as PM) consisting of carbon and the like in exhaust gas.

The DPF 38 is made up of a honeycomb-shaped ceramic carrier.

A number of paths connecting the upstream side to the downstream side are arranged parallel to one another. These paths include upstream-side and downstream-side openings that are alternately closed. The DPF 38 traps the PM in the exhaust gas of the engine 1 when the exhaust gas flows through these paths.

As the oxidation catalyst 36 oxidizes NO in exhaust gas to produce NO₂ the foregoing arrangement of the oxidation catalyst 36 and the DPF 38 generally causes the PM, which is trapped by and accumulated in the DPF 38, to react with NO₂ supplied from the oxidation catalyst 36. As a result, the DPF 38 is continuously regenerated.

Placed on the upstream side of the oxidation catalyst 36 is an upstream pressure sensor 40 that detects exhaust pressure on the exhaust upstream side of the oxidation catalyst 36 and the DPF 38. On the downstream side of the oxidation catalyst 36, there is disposed a downstream pressure sensor 42 that detects exhaust pressure on the exhaust downstream side of the DPF 38.

The exhaust pipe 20 is provided with a flow rate sensor 44 that detects an exhaust gas flow rate, and is further provided with an exhaust temperature sensor 46 that detects exhaust gas temperature.

An ECU (electrical control unit) 50 is a controller for carrying out comprehensive control including an operation control of the engine 1, and is formed of a CPU, a memory, a timer (timing means), etc. The ECU calculates various control amounts and controls different kinds of devices on the basis of these control amounts.

Connected to an input side of the ECU 50 are not only the upstream pressure sensor 40, the downstream pressure sensor 42, the flow rate sensor 44 and the exhaust temperature sensor 46, but also different kinds of sensors, in order to collect information required for various controls. Connected to an output side of the ECU 50 are different kinds of devices including the injectors 4 of the cylinders, the intake control valve 12, the EGR valve 22, the exhaust throttle valve 26, a warning device (warning means) 52, etc., which are controlled according to the calculated control amounts.

The ECU 50 carries out the calculation of the amount of fuel to be supplied to the cylinders of the engine 1, and implements various controls, such as fuel-supply control that controls the fuel supply amount from the injectors 4 on the basis of the calculated fuel supply amount.

Especially, in the exhaust aftertreatment device according to the invention, the engine 1 is capable of carrying out not only main fuel injection but also secondary fuel injection (hereinafter, referred to as late post injection) through the injectors 4 in an exhaust stroke (for example, in the later stage of the exhaust stroke) with the aimof the increase of exhaust gas temperature, and the like. The exhaust aftertreatment device is capable of performing the late post injection in response to a command of the ECU 50 (fuel injection control means). If the late post injection is performed according to the command of the ECU 50, a lot of the fuel injected by the late post injection can be discharged as unburned fuel into the exhaust pipe 20. It is then possible to increase the exhaust gas temperature by reacting the unburned fuel with oxygen remaining in exhaust gas within the exhaust pipe 20 or to increase the temperature of the oxidation catalyst 36 by causing an oxidation reaction of the unburned fuel on the oxidation catalyst 36.

For example, when the regeneration of the DPF 38 is necessary, forced regeneration control is implemented by the ECU 50. If the late post injection is performed as the forced regeneration control, this increases the temperature of the oxidation catalyst 36 and heats the DPF 38 located on the exhaust downstream side. By this means, the PM accumulated in the DPF 38 is burned and removed, thereby regenerating the DPF 38 (forced regeneration means).

Whether or not the forced regeneration of the DPF 38 is necessary is determined, for example, in the following way. A coefficient, or a so-called differential pressure coefficient (hereinafter, referred to as A value), corresponding to an accumulation amount Qm of the DPF 38 is obtained on the basis of differential pressure between a pressure value from the upstream pressure sensor 40 and a pressure value from the downstream pressure sensor 42, an exhaust gas flow rate from the flow rate sensor 44, and exhaust gas temperature from the exhaust temperature sensor 46. The need for the forced regeneration of the DPF 38 is then determined depending upon whether the A value is equal to or higher than a prescribed value (accumulation-amount estimating means). In short, when the A value reaches the prescribed value, it is determined that the forced regeneration of the DPF 38 is necessary, and the forced regeneration control is started.

The DPF 38 is designed to trap PM as mentioned, and it is mainly the PM that is accumulated in the DPF 38. In addition to the PM, however, ash consisting of calcium (Ca) contained in engine oil and the like (hereinafter, referred to as Ash) is also accumulated in the DPF 38. Unlike PM, the Ash is a flame-retardant component, and is therefore not be removed by the forced regeneration. The DPF 38 then needs to be cleaned with proper timing.

For that reason, it is required to precisely detect or estimate the Ash accumulation amount in the DPF 38 and accurately assess the Ash accumulation and then the need for Ash cleaning. The following description is about a method of assessing the need for Ash cleaning in the exhaust aftertreatment device according to the invention, namely, an Ash-cleaning assessment method.

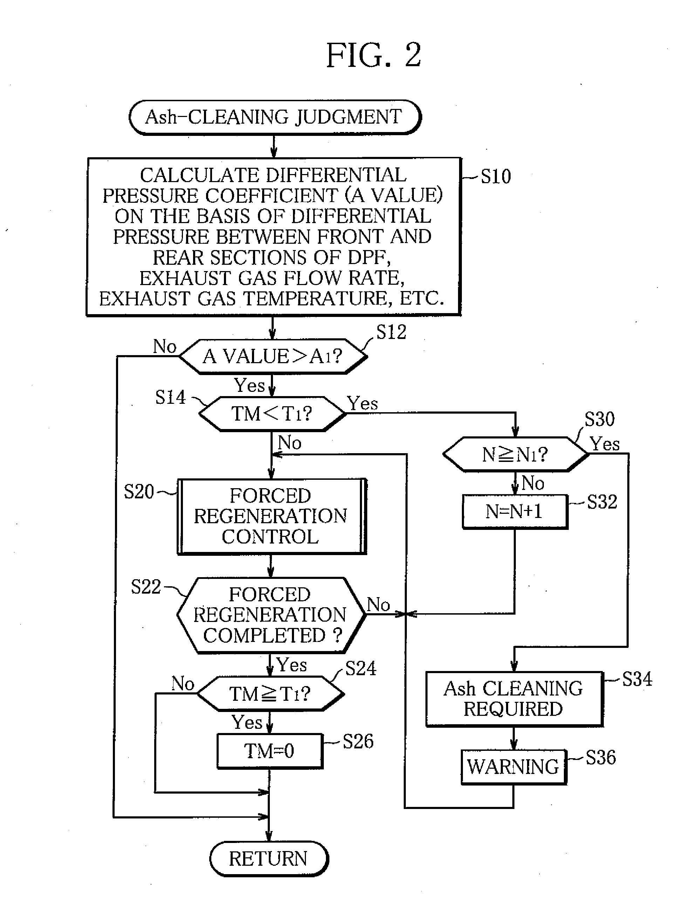

FIG. 2 shows, in the form of a flowchart, an assessment routine including the steps of Ash cleaning assessment that is carried out by the ECU 50. The description will be provided with reference to the flowchart (Ash assessment means).

In Step S10, the differential pressure coefficient, namely, the A value is obtained on the basis of the differential pressure between the pressure value from the upstream pressure sensor 40 and the pressure value from the downstream pressure sensor 42, the exhaust gas flow rate from the flow rate sensor 44, and the exhaust gas temperature from the exhaust temperature sensor 46. Step S12 then determines whether the A value is larger than a prescribed value A1. If the determination is NO, the subsequent steps of the current routine are skipped. If the determination is YES, the procedure advances to Step S14 and the subsequent steps. Accordingly, the forced regeneration of the DPF 38 and the assessment of Ash accumulation are started.

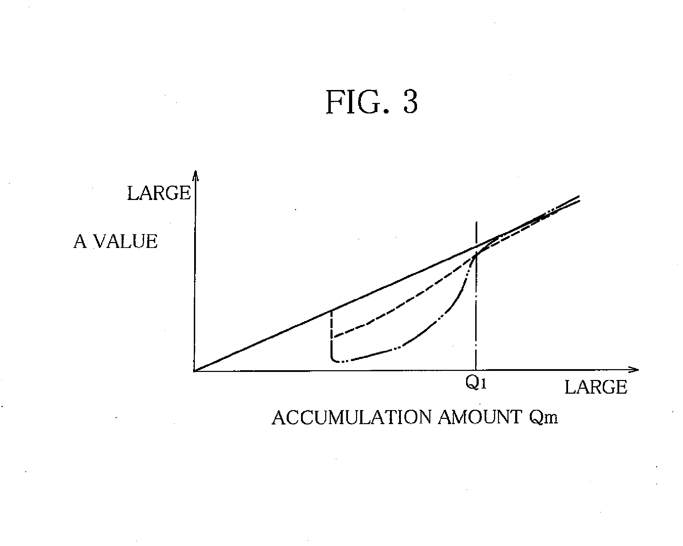

If the A value exceeds the prescribed value A1, the forced regeneration of the DPF 38 is started. In this specification, the prescribed value A1 corresponds to a relatively large prescribed amount (prescribed accumulation amount) Q1 of the accumulation amount Qm. In this manner, a determination is made as to whether the A value is larger than the prescribed value A1 corresponding to the prescribed amount Q1 of the accumulation amount Qm. This is because, under the situation where the accumulation amount Qm of the PM and the Ash in the DPF 38 is small, the A value often contains an error for a variety of reasons as already mentioned; and if the A value is used to assess the Ash accumulation, the Ash accumulation is not accurately assessed due to the difficulty of estimation of an exact Ash accumulation amount as explained below. For instance, as in FIG. 3 showing a relationship between the accumulation amount Qm and the A value, which reflects whether or not the continuous regeneration of the DPF 38 is performed (the solid line means that the continuous regeneration is not performed, and the broken line and the chain double-dashed line mean that the continuous regeneration is performed), the A value is fluctuated within a range where the accumulation amount Qm is equal to or smaller than the prescribed amount Q1, and the A value is equal to or smaller than the prescribed value A1. However, within a range where the accumulation amount Qm is larger than the prescribed amount Q1, and the A value is larger than the prescribed value A1, there is a tendency that the accumulation amount Qm and the A value stably maintain a constant proportional relationship. Under the circumstances, the forced regeneration and the assessment of Ash accumulation are started only if the accumulation amount Qm and the A value are larger than the prescribed amount Q1 and the prescribed value A1, respectively.

Step S14 makes a determination as to whether the measured time of a timer TM that measures an elapsed time since the completion of forced regeneration described later in detail is less than a regulation time period (prescribed time period, regulation time period) T1. If the determination is NO, or more specifically, if it is determined that the regulation time period T1 has lapsed since the completion of the previous forced regeneration, the procedure moves directly to Step S20, which performs the forced regeneration.

After the forced regeneration is carried out in Step S20, Step S22 determines whether the forced regeneration is completed. If the determination is NO, the forced regeneration is continued. If the determination is YES, it is determined that the forced regeneration is completed, and the procedure advances to Step S24.

In Step S24, a determination is made as to whether or not the measured time of the timer TM is the regulation time period T1 or more. If the determination is NO, the subsequent steps of the current routine are skipped. If the determination is YES, which means that the measured time of the timer TM is the regulation time period T1 or more, the timer TM is reset to zero in Step S26. In other words, the assessment of Ash accumulation determines whether or not the elapsed time since the completion of the previous forced regeneration is equal to or more than the regulation time period T1. To that end, the timer TM is reset after every regulation time period T1 that is a time period of the assessment. The measurement of the regulation time period T1 is thus repeated.

If the determination of Step S14 is YES, and the elapsed time since the completion of the previous forced regeneration is less than the regulation time period T1, the procedure moves to Step S30.

Step S30 determines whether or not a counter N, which counts the number of times the A value exceeds the prescribed value A1 as a result of repeated forced regeneration within the regulation time period T1, is a prescribed number of times N1 (for example, N1=any one of 1 to 3) ormore. If the determination is NO, which means that the counter N is less than the prescribed number of times N1, the counter N is incremented (N=N+1) in Step S32. The procedure then moves to Step S20, which performs the forced regeneration. If the determination is YES, and it is determined that the counter N becomes the prescribed number of times N1 or more, the procedure advances to Step S34.

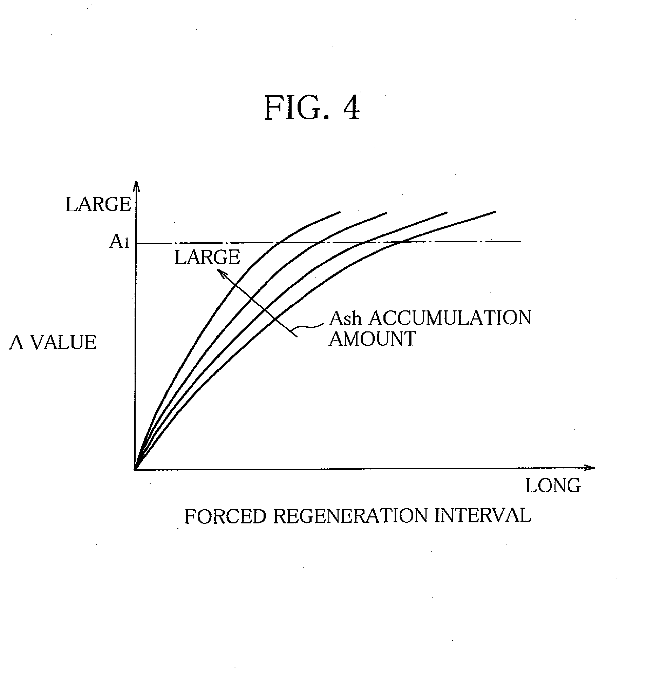

If the determination of Step S30 is YES, which means that the counter N has reached the prescribed number of times N1 within as short a period as the regulation time period T1, that the A value has exceeded the prescribed value A1, and that the number of times the forced regeneration is performed has reached the prescribed number of times, the PM-trapping function of the DPF 38 is so deteriorated that the A value quickly reaches the prescribed value A1 again due to a decrease of the forced regeneration interval in spite that the PM has been burned and removed by the forced regeneration, as in FIG. 4 showing a relationship between the A value and the forced regeneration interval corresponding to a change of the Ash accumulation amount. In short, it can be determined that the DPF 38 accumulates a prescribed or larger amount of Ash, that is, as much Ash as cleaning is required. Step S34 therefore judges that the cleaning of the DPF 38, namely Ash cleaning, is necessary. In Step S36, a warning device 52 or the like gives a warning (display, sound, etc.) meaning that the Ash cleaning is required, and thus urges a vehicle driver to carry out the cleaning of the DPF 38. The counter N may be reset to zero after the cleaning.

As described above, in the exhaust aftertreatment device of the invention, when the A value exceeds the prescribed value A1 again due to the repeated forced regeneration within the regulation time period T1, it is judged that the amount of the Ash accumulated in the DPF 38 is equal to or larger than the regulation amount, and that the Ash cleaning is required. In this case, only if the accumulation amount Qm is larger than the prescribed amount Q1, and the A value is stable without being fluctuated, the forced regeneration is performed according to the A value, and the Ash accumulation is assessed.

It is therefore possible, by using the A value, to precisely realize the decrease of the interval of the forced regeneration performed when the PM-trapping function of the DPF 38 is deteriorated, while eliminating an affect of the error of the A value. Accordingly, the Ash accumulation can be assessed with accuracy.

By this means, it is possible to remove the Ash by cleaning the DPF 38 with proper timing, suppress the progress of clogging of the DPF 38 attributable to the Ash, and successfully maintain the PM-trapping function of the DPF 38. As a result, the exhaust pressure is overall prevented from being increased, so that the deterioration of fuel consumption is prevented. Moreover, the DPF 38 is prevented from being cleaned more frequently than necessary.

In this specification, when the counter N becomes the prescribed number of times N1 or more within the regulation time period T1, it is judged that the Ash cleaning is necessary. However, for example, if the prescribed number of times N1 is set to two or more (for example, N1=either 2 or 3), assessment accuracy is improved as compared to when the prescribed number of times N1 is one (N1=1). Accordingly, an incorrect assessment can be prevented as much as possible. In this case, the regulation time period T1 may be properly adjusted according to the prescribed number of times N1 (prescribed time period, regulation time period).

This is the end of the description of the one embodiment of the exhaust aftertreatment device according to the invention, but the embodiment of the invention is not limited to the one described above.

For example, the embodiment carries out the forced regeneration on the basis of the A value on the premise that the assessment of the Ash cleaning is conducted. However, the assessment of the Ash cleaning may be switched between execution and inexecution. In this case, when the assessment of the Ash cleaning is not conducted, the accumulation amount Qm does not have to be larger than the prescribed amount Q1. In such a range, on the other hand, the A value contains an error as stated above. The PM accumulation amount therefore may be estimated by a so-called engine out method that estimates PM amount on the basis of exhaust gas of the engine 1 or by another method, instead of using the A value.

Although the embodiment provides the flow rate sensor 44, and detects the exhaust gas flow rate directly from the flow rate sensor 44. This is not the only way to detect the exhaust gas flow rate. The exhaust gas flow rate may be calculated on the basis of intake air flow late information, fuel amount information, exhaust gas temperature information, exhaust pressure information, etc.

In the embodiment, the DPF 38 is forcibly regenerated by performing the late post injection. However, the forced regeneration of the DPF 38 may be carried out by providing a fuel injection device to the exhaust pipe 20 on the exhaust upstream side of the oxidation catalyst 36, and injecting fuel from the fuel injection device within the exhaust Pipe 20. The invention is well applicable to such a configuration as in the embodiment.

Although the embodiment provides the turbocharger 8, the intake control valve 12, the EGR valve 22, the EGR path 24 and the exhaust throttle valve 26, they are not essential to the invention, and do not have to be provided.

## Claims

1. An exhaust aftertreatment device comprising: a filter that is interposed in an exhaust path of an internal combustion engine and traps particulate matter and ash in exhaust gas;
differential-pressure detecting means for detecting differential pressure between exhaust pressure on an exhaust-gas upstream side of the filter and exhaust pressure on an exhaust-gas downstream side of the filter in the exhaust path;
accumulation-amount estimating means for estimating an accumulation amount of the particulate matter and ash trapped in the filter at least on the basis of differential pressure information transmitted from the differential-pressure detecting means;
forced regeneration means for forcibly regenerating the filter by burning and removing the particulate matter trapped in the filter when an estimated value obtained by the accumulation-amount estimating means reaches a prescribed value corresponding to a prescribed accumulation amount of the particulate matter and the ash;
timing means for measuring an elapsed time since the completion of the forced regeneration of the filter by the forced regeneration means; and
ash-judging means for judging that an amount of ash accumulated in the filter is equal to or larger than a regulation amount when the estimated value obtained by the accumulation-amount estimating means reaches the prescribed value again before the elapsed time measured by the timing means reaches a prescribed time period.

2. The exhaust aftertreatment device according to claim 1, wherein the ash-judging means judges that the amount of the ash accumulated in the filter is equal to or larger than the regulation amount when the forced regeneration of the filter by the forced regeneration means is repeated, and the estimated value reaches the prescribed value a predetermined number of times or more before the elapsed time measured by the timing means reaches a regulation time period.

3. The exhaust aftertreatment device according to either one of claims 1 and 2, further having warning means for giving a warning to urge the cleaning of the filter when the ash-judging means judges that the amount of the ash is equal to or larger than the regulation amount.
